(19) Europäisches Patentamt
European Patent Office
Office européen des brevets

(11) Publication number: **0 206 413 A2**

# (12) EUROPEAN PATENT APPLICATION

(21) Application number: **86201044.4**

(22) Date of filing: **17.06.86**

(51) Int. Cl.⁴: **C08K 5/00**, C08K 13/02, C08L 101/00, //(C08K5/00,5:07,5:09,5:13,5:20-,5:39),(C08K13/02,3:22,5:07,5:0-9,5:13,5:39)

(30) Priority: **19.06.85 IT 2120885**

(43) Date of publication of application: **30.12.86 Bulletin 86/52**

(84) Designated Contracting States: **AT BE CH DE FR GB LI LU NL SE**

(71) Applicant: **BOZZETTO INDUSTRIE CHIMICHE S.p.A.**
**Via Mazzini 11**
**I-26044 Pedrengo Bergamo(IT)**
Applicant: **ENICHEM SINTESI S.p.A.**
**Via Ruggero Settimo 55**
**I-90139 Palermo(IT)**

(72) Inventor: **Sandrinelli, Piergiacomo**
**Via Alpini 5**
**I-24066 Pedrengo Bergamo(IT)**
Inventor: **Cafaro, Lorenzo**
**Via Gramsci 11**
**I-24066 Pedrengo Bergamo(IT)**
Inventor: **Broussard, Fabio**
**Piazza Veneto 4**
**I-24060 Brusaporto Bergamo(IT)**
Inventor: **Neri, Carlo**
**Via Europa 32**
**I-20097 San Donato Milanese Milan(IT)**

(74) Representative: **Roggero, Sergio et al**
**Ing. Barzanò & Zanardo Milano S.p.A. Via Borgonuovo 10**
**I-20121 Milano(IT)**

## (54) Stabilized polymeric compositions and stabilizer systems suitable to this purpose.

(57) A stabilizer system for organic polymers is formed by a phenolic antioxidizer and by a zinc or aluminum compound selected among carboxylates, dithiocarbamates, phenates, organometallic complexes of zinc or of aluminum, or zinc oxide, in an amount of from 50 to 10,000 ppm, as expressed as metal zinc or aluminum, relatively to the phenolic antioxidizer.

The stabilized polymer compositions comprise an organic polymer and a stabilizing amount of said stabilizer system.

The compound of zinc or aluminum, used in the indicated amounts, allows the stabilizer effect exerted by the phenolic antioxidizer on the organic polymers to be improved.

EP 0 206 413 A2

# "STABILIZED POLYMERIC COMPOSITIONS AND STABILIZER SYSTEMS SUITABLE TO THIS PURPOSE"

The present invention relates to a stabilizer system for organic polymers and to the stabilized polymeric compositions containing such a stabilizer system.

It is well known that organic polymers undergo degradation during their processing and transformation, and with time, due to the exposure to environmental conditions, and such a degradation becomes apparent through the yellowing and/or the lowering of the physical characteristics of the polymers, such as, e.g., the decrease of the ultimate tensile strength and of the flexibility thereof, which are accompanied by the variation of viscosity index.

To counteract such a degradation, it is usual in the art to introduce into the organic polymers small amounts of antioxidizer compounds, generally constituted by sterically hindered phenols. Said phenolic antioxidizers are normally present in the compositions of organic polymers in amounts small and as a function of the particular phenolic antioxidizer used and of the stabilization degree which one desires to confer to the organic polymer.

It has been found now, according to the present invention, that the stabilizing activity of the phenolic antioxidizers known can be enhanced by introducing into the organic polymer, together with the phenolic antioxidizer, extremely reduced amounts of at least one zinc or aluminum compound, selected among particular classes of zinc or aluminum compounds.

In this way, it results it possible to obtain, relatively to the known art, a higher resistance to yellowing and/or a higher stabilizing effect for a certain concentration of the phenolic antioxidizer in the stabilized polymer composition, or it results it possible to decrease the concentration of the phenolic antioxidizer in the polymer composition for a given desired stabilization level.

U.S Patent No. 4,192,794 discloses compositions containing pigments and stable to U.V. light, containing a polyolefin, titanium dioxide, a phenolic stabilizer and a zinc salt of a carboxylic acid.

In particular, according to said patent, the zinc salt of carboxylic acid shows its activity at concentrations ranging from 0.1 to 5% in the polymeric composition, which are not useful, to the contrary, which are detrimental in the stabilized polymeric compositions of the present invention. Moreover, according to said patent, the zinc salts do not show a synergistic effect towards the phenolic stabilizers in the absence of the titanium dioxide pigment, whilst the stabilizer system of the present invention does not require the presence either of titanium dioxide or of another pigment, to be able to exert its stabilizing activity.

Consequently, according to one of its features, the present invention relates to a stabilizer system for organic polymers formed by at least a phenolic antioxidizer and by at least a zinc or aluminum compound selected among zinc or aluminum carboxylates, dithiocarbamates, phenates, organometallic complexes, or zinc oxide, in an amount of from 50 to 10,000 parts per million by weight (ppm), as expressed as metal zinc or aluminum, relatively to the phenolic antioxidizer.

Moreover, according to another of its features, the present invention relates to a stabilized polymer composition comprising an organic polymer and an amount of stabilizer system, as it has been defined above, of from 0.005 to 10% by weight relatively to the organic polymer.

In the preferred embodiment the stabilizer system of the present invention contains an amount of zinc or aluminum compound of from 100 to 5,000 ppm and the stabilized polymer compositions contain an amount of stabilizer system of from 0.01 to 4% by weight.

As for the concentration range of zinc or aluminum compound (from 50 to 10,000 ppm), it should be observed that concentrations under 50 ppm do not produce any significant effects in enhancing the stabilizing activity of the phenolic compound, whilst concentrations higher than 10,000 ppm have generally a negative effect on said stabilizer activity, which tends to decrease, sometimes under the values obtainable by means of the phenolic antioxidizer alone.

Moreover, concentrations of zinc or aluminum compounds higher than 10,000 ppm tend to colour the polymer into which the stabilizer system is incorporated, when said polymer is submitted to the thermal treatments required for the processing and the transformation thereof. The best results are obtained by operating within the preferred range for the compound of zinc or of aluminum, i.e., of from 100 to 5,000 ppm.

Zinc and aluminum compounds useful to the purposes of the present invention are zinc or aluminum carboxylate and dithiocarbamate salts, or zinc or aluminum phenates, organometallic complexes of zinc or aluminum, or zinc oxide. In particular, zinc and aluminum carboxylates may be selected among the zinc or aluminum salts of fatty acids, either saturated or unsaturated, of from 2 to

20 carbon atoms, either with straight or with branched chain. Among these, the zinc or aluminum salts of 2-ethylhexanoic acid, n-octanoic acid, and stearic acid, are preferred.

The carboxylates of zinc and aluminum may be additionally selected among the zinc or aluminum salts of aromatic acids possibly bearing one or more substituents such as ($C_1$-$C_{10}$)-alkyl or hydroxy substituents. Among these, the zinc or aluminum salts of benzoic acid, salicylic acid and 3,5-di-tert.butyl-4-hydroxyphenyl propanoic acid are preferred.

The compounds of zinc and aluminum may be further selected among the zinc or aluminum salts of dithiocarbamic acids, and in particular of alkyl- and dialkyl-dithiocarbamic acids with from 1 to 20 carbon atoms in the alkyl group. Among these, the zinc or aluminium salts of dimethyldithiocarbamic, dibutyldithiocarbamic and dinonyldithiocarbamic acids are preferred.

Other zinc and aluminum compounds, useful to the purpose of the present invention, are the phenate derivatives, i.e., the derivatives of phenol, or of phenol bearing one or more substituents, such as alkyl substituents containing from 1 to 10 carbon atoms. Among these, zinc or aluminum p-nonylphenate and zinc or aluminum 2,4-di-tert.butylphenate are preferred.

Among the organometallic complexes, aluminum acetylacetonate and zinc acetylacetonate is preferred.

The phenolic antioxidizers useful to the purposes of the present invention are those sterically hindered phenols which are used in the art to the purpose of stabilizing the organic polymers, and which normally belong to the class of 2,6-dialkylphenols, bisphenols, aromatic hydroxybenzyls, amides of $\beta$-(3,5-di-tert.butyl-4-hydroxyphenyl)-propanoic acid, esters of $\beta$-(3,5-di-tert.butyl-4-hydroxyphenyl)-propanoic acid and diphenolic spiro-diacetals and spiro-diketals.

Examples of phenolic antioxidizers, useful to the purposes of the present invention, are:

* 2,6-dialkylphenols, such as: 2,6-di-tert.butyl-4-methylphenol; 2,6-di-tert.butyl-4-methoxymethylphenol-sh; 2,6-di-tert.butyl-4-methoxyphenol;

* bisphenols, such as: 2,2'-methylene-bis-(6-tert.butyl-4-methylphenol); 2,2'-methylene-bis-(6-tert.butyl-4-ethylphenol); 2,2'-methylene-bis-[4-methyl-(6-$\alpha$-methylcyclohexyl)-phenol]; 1,1-bis-(5-tert.butyl-4-hydroxy-2-methylphenyl)-butane; 2,2-bis-(5-tert.butyl-4-hydroxy-2-methylphenyl)-butane; 2,2-bis-(3,6-di-tert.butyl-4-hydroxyphenyl)-propane; 1,1,3-tris-(5-tert.butyl-4-hydroxy-2-methylphenyl)-butane; 2,2-bis-(5-tert.butyl-4-hydroxy-2-methylphenyl)-4-n.dodecylmercapto-butane; 1,1,5,5-tetra-(5-tert.butyl-4-hydroxy-2-methylphenyl)-pentane; ethylene glycol-bis-[3,3-bis-(3'-tert.butyl-4'-hydroxyphenyl)-butyrate]; 1,1-bis-(3,5-dimethyl-2-hydroxyphenyl)-3-(n-dodecylthio)-butane; 4,4'-thio-bis-(6-tert.butyl-3-methylphenol);

* aromatic hydroxybenzyls, such as 1,3,5-tri-3,5-di-tert.butyl-4-hydroxybenzyl)-2,4,6-trimethylbenzene; dioctadecyl ester of 2,2-bis-(3,5-di-tert.butyl-4-hydroxybenzyl)-malonic acid; 1,3,5-tris-(3,5-di-tert.butyl-4-hydroxybenzyl)-isocyanurate; diethylester of 3,5-di-tert.butyl-4-hydroxybenzyl-phosphonic acid;

* amides of $\beta$-(3,5-di-tert.butyl-4-hydroxyphen yl)-propanoic acid, such as 1,3,5,-tris-(3,5-di-tert.butyl-4-hydroxyphenyl-propanoyl)-hexahydro-s-triazine; N,N'-di-(3,5-di-tert.butyl-4-hydroxyphenyl-propanoyl)-hexamethylenediamine;

* esters of $\beta$-(3,5-di-tert.butyl-4-hydroxyphenyl)-propanoic acid with mono-or polyvalent alcohols, such as methanol, octadecanol; 1,6-hexanediol, ethylene glycol, thioethylene glycol, neopentyl glycol, pentaerithritol, tri-hydroxyethyl-isocyanurate;

* spiro-compounds, such as diphenolic spiro-diacetals or spirodiketals, e.g., 2,4,8,10-tetraoxaspiro-[5,5]-undecane substituted in the 3-and 9-positions with phenolic radicals, such as 3,9-bis-(3,5-di-tert.butyl-4-hydroxyphenyl)-2,4,8,10-tetraoxaspiro-[5,5]-undecane; 3,9-bis-[1,1-dimethyl-2-(3,5-di-tert.butyl-4-hydroxyphenyl)-ethyl]-2,4,8,10-tetraoxaspiro-[5,5]-undecane.

Phenolic antioxidizers preferred to the purposes of the present invention are those corresponding to the following chemical formulae:

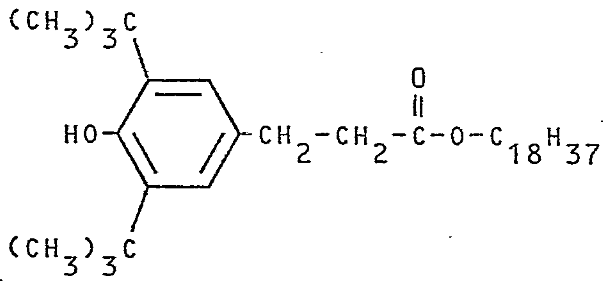

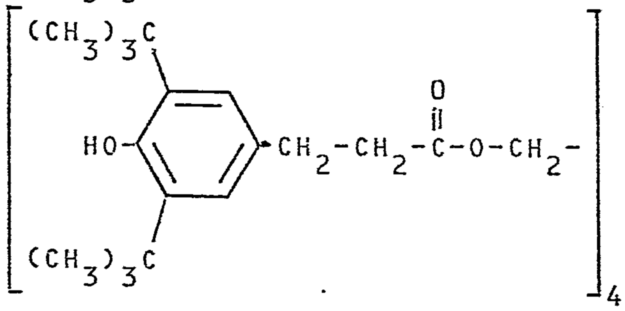

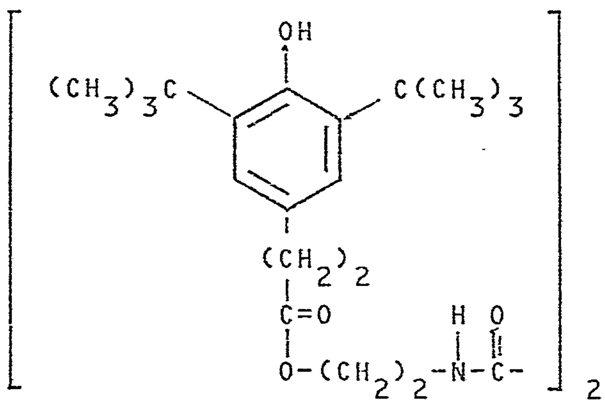

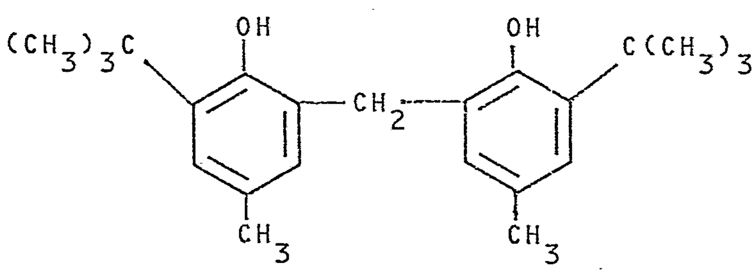

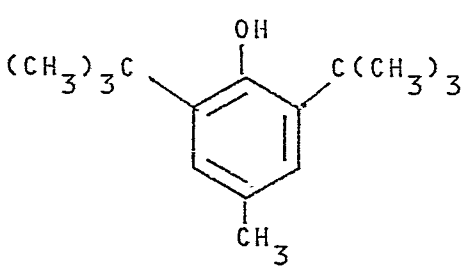

The polymers which are stabilized by means of the stabilizer system of the present invention are the organic polymers in general and polyolefins especially, such as polypropylene, low-density polyethylene, low-density linear polyethylene and high density polyethylene, as well as rubbers, such as EPDM rubbers.

The production of the stabilizer systems of the present invention may take place by simple blending and homogenizing of the constituents of the same system.

The production of the polymeric compositions stabilized according to the present invention takes place by homogenizing between the polymer and the stabilizer sys tem by means of the techniques normally used for the introduction of stabilizers into polymers.

To the purpose of verifying the stabilizing action of the stabilizer system of the present invention, measurements are carried out of Melt Flow Index (MFI) of a polymeric composition containing an organic polymer and the stabilizer system, which is submitted to repeated extrusions. Moreover, from the granules of the extruded polymeric composition, slabs of 2 mm in thickness are prepared by compression, onto which measurements are carried out of the yellow index, before and after thermal ageing in an oven with air circulation, at 140°C.

The measurements of the variation of melt index are carried out starting from the powder of organic polymer, which is blended with a phenolic antioxidizer, in an amount of 0.1% by weight relatively to the organic compound, and with a zinc compound, in amounts selected within the range of from 500 ppm to 10,000 ppm, as metal zinc, relatively to the phenolic antioxidizer. The so obtained blend is mixed over a 30 minutes time in order to homogenize it, operating on a planetary blender. The extrusions of the homogeneous polymeric composition so obtained are accômplished on an extruder of 19 mm in diameter, with a length of about fivefold the diameter, provided with screw and with a 2-mm nozzle, by operating with a compression ratio of 1:4 at the speed of 50 rpm and with a temperature profile along the extruder of: 175°C; 235°C; 270°C; 270°C.

After each extrusion, the filament is cut into pellets. A portion of the pellets so obtained is analyzed for the melt index according to ASTM-D 1238 Standard, by operating at 190°C and under a pressure of 2.16 kg, and the residual portion is submitted to another passage through the extruder. In this series of tests, as the organic polymer, the commercial polypropylene sold by the firm Montedison under the trade name Moplen® RFL 20F is used, the polymeric composition is passed seven times through the extruder and the melt index after the first, the third, the fifth and the seventh passage is measured.

The results obtained are reported in Tables from 1 to 3, wherein the following phenolic antioxidizers are used:

Antiox A

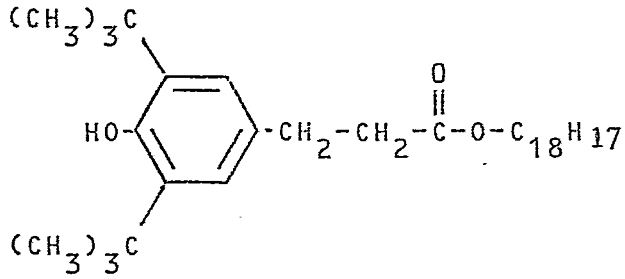

Antiox B

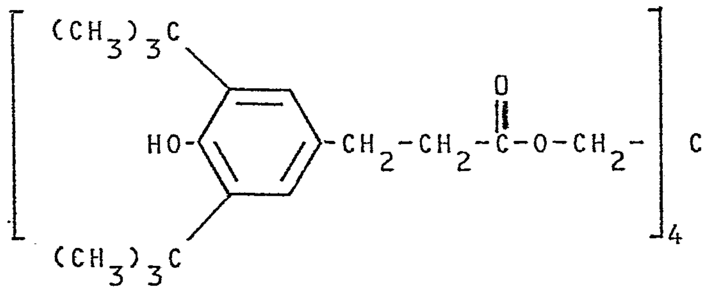

Antiox C

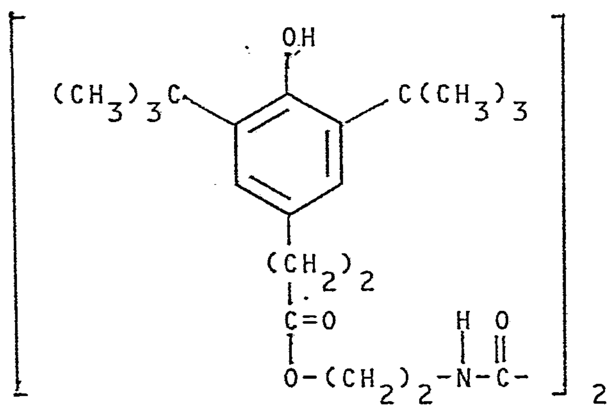

Antiox D

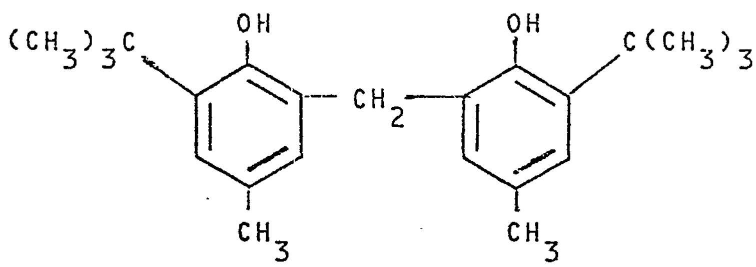

Antiox E

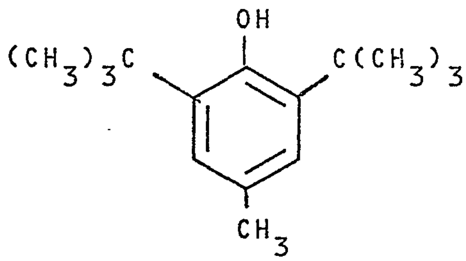

These antioxidizers are always used in an amount of 0.1% by weight relatively to polypropylene. In Tables 1 to 3, the zinc compound used is also reported, as well as the amount thereof, as expressed as ppm (by weight) of metal zinc, relatively to phenolic antioxidizer.

To comparison purposes, the extrusion tests are carried out also on virgin polypropylene and on polypropylene containing 0.1% by weight of phenolic antioxidizer, in the absence of any zinc compounds.

In some cases, a sample of the pellets used after the first and after the fifth passage through the extruder, is compression-moulded at 200°C, until slabs of 1.5 mm in thickness are obtained, by operating for three minutes under 4 kg/cm² and three minutes under 130 kg/cm², and subsequently cooling the so-obtained slabs in water at room remperature. On these slabs, measurements are carried out of yellow index on reflectivity. The results of these tests are reported in Table 4.

Moreover, in some cases, the slabs obtained from the first extrusion are submitted to accelerated heat ageing at 140°C in an oven with air circulation. The yellow index is evaluated before the thermal treatment and periodically during the thermal treatment and the results of these tests are reported in table 5.

TABLE 1

| Stabilizer | MFI after extrusion No. 1 | 3 | 5 | 7 |
|---|---|---|---|---|
| a) None | 9.5 | 23.2 | 39.6 | - |
| b) Antiox A | 7.1 | 10.5 | 13.8 | 17.4 |
| c) Antiox A + Zn octanoate (500 ppm) | 7.3 | 10.4 | 13.4 | 16.3 |
| d) Antiox A + Zn octanoate (1000 ppm) | 6.9 | 9.5 | 12.3 | 15.4 |
| e) Antiox A + Zn DMDTC* (1000 ppm) | 7.6 | 9.5 | 11.8 | 13.2 |
| f) Antiox A + Zn DMDTC* (10,000 ppm) | 8.1 | 8.9 | 11.2 | 12.6 |
| g) Antiox A + Poliplast 6** (500 ppm) | 7.2 | 9.6 | 12.6 | 15.5 |
| h) Antiox A + ZnO (1000 ppm) | 7.2 | 10.1 | 13.1 | 15.7 |
| i) Antiox A + ZnPP*** (1000 ppm) | 7.7 | 10.1 | 12.5 | 14.7 |
| l) Antiox A + ZnPP*** (5000 ppm) | 7.5 | 10.0 | 12.3 | 14.5 |
| m) Antiox A + Zn stearate (1000 ppm) | 7.4 | 10.3 | 12.9 | 13.9 |
| n) Antiox A + Zn Acac**** (1000 ppm) | 7.85 | 10.37 | 13.21 | 15.70 |

TABLE 1 (cont.d)

| Stabilizer | MFI after extrusion No. 1 | 3 | 5 | 7 |
|---|---|---|---|---|
| o) Antiox A + Zn Acac**** (5000 ppm) | 7.77 | 10.40 | 13.35 | 16.34 |
| p) Antiox A + Zn Acac**** (10.000 ppm) | 8.10 | 10.57 | 13.51 | 16.73 |

* Zn DMDTC = zinc dimethyldithiocarbamate

** Poliplast 6 = blend of zinc salts of unsaturated fatty acids marketed by the firm Bozzetto

*** ZnPP =

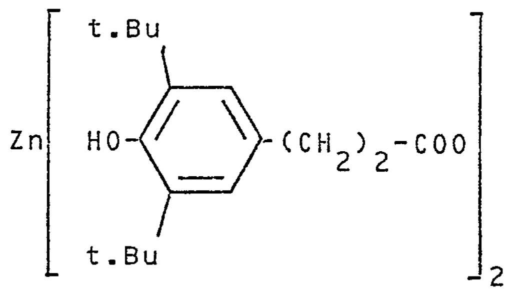

**** Zn Acac = zinc acetylacetonate.

TABLE 2

| Stabilizer | MFI after extrusion No. 1 | 3 | 5 | 7 |
|---|---|---|---|---|
| a) None | 9.5 | 23.2 | 39.6 | - |
| b) Antiox B | 7.5 | 10.3 | 12.7 | 14.7 |
| c) Antiox B + Zn octanoate (1000 ppm) | 7.0 | 9.6 | 12.4 | 14.6 |
| d) Antiox B + Zn octanoate (5000 ppm) | 6.9 | 8.7 | 10.3 | 11.7 |
| e) Antiox B + Zn DMDTC* (1000 ppm) | 6.8 | 8.3 | 10.0 | 11.5 |
| f) Antiox B + Zn DMDTC* (5000 ppm) | 6.4 | 8.2 | 9.8 | 11.2 |
| g) Antiox B + | | | | |

TABLE 2 (cont.d)

| Stabilizer | MFI after Extrusion No. 1 | 3 | 5 | 7 |
|---|---|---|---|---|
| ZnPP*** (1000 ppm) | 7.2 | 9.7 | 12.3 | 13.8 |
| h) Antiox B + | | | | |
| ZnO*** (1000 ppm) | 7.1 | 9.2 | 11.6 | 13.2 |
| i) Antiox B + | | | | |
| Zn stearate (1000 ppm) | 7.3 | 9.9 | 12.5 | 14.6 |

* Zn DMDTC = zinc dimethyldithiocarbamate

*** ZnPP =

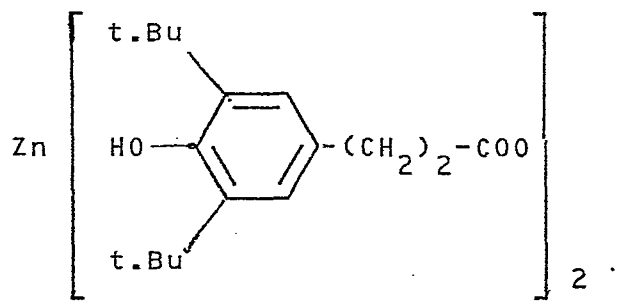

TABLE 3

| Stabilizer | MFI after extrusion No. 1 | 3 | 5 | 7 |
|---|---|---|---|---|
| a) None | 9.5 | 23.2 | 39.6 | - |
| b) Antiox C | 8.1 | 11.1 | 13.9 | 16.9 |
| c) Antiox C + | | | | |
| Zn stearate (1000 ppm) | 7.5 | 10.0 | 12.6 | 14.9 |
| d) Antiox D | 6.1 | 7.5 | 8.8 | 10.2 |
| e) Antiox D + | | | | |
| Zn stearate (1000 ppm) | 6.0 | 7.2 | 8.5 | 9.6 |
| f) Antiox E | 6.4 | 8.2 | 9.7 | 11.5 |
| g) Antiox E + | | | | |
| Zn stearate (1000 ppm) | 6.3 | 8.0 | 9.5 | 11.4 |

TABLE 4

| Stabilizer | Yellow Index after extrusion No. 1 | 5 |
|---|---|---|
| a) Antiox A | 4.94 | 7.36 |
| b) Antiox A + Zn octanoate (1000 ppm) | 4.51 | 7.55 |
| c) Antiox A + Zn DMDTC* (1000 ppm) | 4.99 | 7.29 |
| d) Antiox B | 5.65 | 6.49 |
| e) Antiox B + Zn stearate (1000 ppm) | 5.34 | 7.63 |
| f) Antiox C | 6.87 | 7.91 |
| g) Antiox C + Zn stearate (1000 ppm) | 7.09 | 8.38 |

* Zn DMDTC = zinc dimethyldithiocarbamate

TABLE 5

| Stabilizer | Yellow Index, hours 0 | 24 | 42 | 66 | 90 |
|---|---|---|---|---|---|
| a) Antiox A | 4.94 | 6.33 | 7.53 | 7.55 | 9.27 |
| b) Antiox A + Zn octanoate (1000 ppm) | 4.51 | 5.67 | 6.40 | 7.12 | 8.26 |
| c) Antiox B | 5.65 | 6.15 | 7.04 | 7.49 | 9.41 |
| d) Antiox B + Zn stearate (1000 ppm) | 5.34 | 6.72 | 7.73 | 8.21 | 9.68 |
| e) Antiox C | 6.87 | 10.45 | 11.17 | 11.82 | 14.87 |
| f) Antiox C + Zn stearate (1000 ppm) | 7.09 | 10.32 | 11.45 | 11.96 | 14.83 |

By using the same procedures as disclosed for polypropylene, melt index (MFI) measurements are carried out after repeated extrusions of stabilized polymer composi tions constituted by polyethylene and by the stabilizer system of the present invention. In Tables 6, 7 and 8, the values of melt index are reported after 1, 3 and 5 extrusions of stabilized polymer compositions respectively containing high density polyethylene (HDPE), low density polyethylene (LDPE) and linear low density polyethylene (LLDPE).

In case of HDPE, a polymer supplied by the firm Enichem Polimeri, free from any additives, and obtained by polymerizing ethylene with a Ziegler-type catalyst system is used. Under these conditions, the phenolic anti oxidizer is present in an amount of 0.03% by weight relatively to the polymer, and the zinc compound is present in an amount of 1000 ppm as expressed as metal xinc, relatively to the phenolic antioxidizer.

The temperature profile of the extruder is maintained in this case at the values: 240°C; 250°C; 260°C; 260°C and extruder speed is of 100 rpm.

In case of LDPE, the commercial product RIBLENE® A42CL of the firm Enichem Polimeri is used. The amount of phenolic antioxidizer is of 0.05% by weight relatively to the polymer and the zinc compound is used in an amount of 1000 ppm by weight, as expressed as metal, relatively to the phenolic antioxidizer. The temperature profile in the extruder is kept in this case at the values: 190°C; 230°C; 250°C; 250°C and the speed of the extruder is of 50 rpm.

In case of LLDPE, a polymer supplied by the firm Enichem Polimeri is used. The amount of phenolic antioxidizer is of 0.03% by weight relatively to the polymer and zinc compound is present in an amount of 1000 ppm as ex pressed as metal, relatively to the phenolic antioxidizer. The temperature profile in the extruder is kept in this case at the values: 240°C; 250°C; 260°C; 260°C.

LLDPE polymer used is virgin and free from any additives.

TABLE 6

| Stabilizer | MFI after extrusion No. 1 | 3 | 5 |
|---|---|---|---|
| None | 6.54 | 5.47 | 4.69 |
| Antiox A | 6.61 | 6.50 | 6.15 |
| Antiox A + Zn octanoate | 7.20 | 6.81 | 6.38 |
| Antiox A + Zn stearate | 7.12 | 6.78 | 6.32 |
| Antiox B | 7.12 | 6.64 | 6.25 |
| Antiox B + Zn Stearate | 7.21 | 6.88 | 6.42 |

TABLE 7

| Stabilizer | MFI after extrusion No. 1 | 3 | 5 |
|---|---|---|---|
| None | 2.34 | 2.21 | 2.12 |
| Antiox A | 2.45 | 2.45 | 2.37 |
| Antiox A + Zn octanoate | 2.55 | 2.55 | 2.56 |

TABLE 8

| Stabilizer | MFI after extrusion No. 1 | 3 | 5 |
|---|---|---|---|
| None | 1.37 | 0.88 | 0.75 |
| Antiox A | 1.76 | 1.46 | 1.22 |
| Antiox A + Zn octanoate | 1.77 | 1.48 | 1.40 |

| Stabilizer | MFI after extrusion No. 1 | 3 | 5 |
|---|---|---|---|
| Antiox A + Zn stearate | 1.76 | 1.47 | 1.34 |

Measurements of melt index change are carried out on stabilized polymeric compositions formed by powder polypropylene and variable amounts of stabilizer system, constituted by the phenolic antioxidizer and by the compound of zinc, this latter in an amount of 1000 ppm, as espressed as metal, relatively to the phenolic antioxidizer. The concentrations of stabilizer system, relatively to the polymer, are held in these tests at the values of 0.1; 0.09; 0.08; and 0.07% by weight. The blending and the homogenizing of polypropylene powder and of the stabilizer system are accomplished by shaking over a 30 minutes time in a planetary system.

The repeated extrusions are carried out as described in preceding Examples relating to polypropylene compositions, and the obtained values are reported in following Tables 9 and 10. Polypropylene used is always the commercial product Moplen® RFL 20F of the firm Montedison.

TABLE 9

| Stabilizer and Amount thereof (% by weight) | MFI after extrusion No. 1 | 3 | 5 | 7 |
|---|---|---|---|---|
| None | 9.5 | 23.2 | 39.6 | - |
| Antiox A (0.1%) | 7.1 | 10.5 | 13.8 | 17.4 |
| Antiox A + Zn octanoate (0,1%) | 6.9 | 9.5 | 12,3 | 15.4 |
| Antiox A + Zn octanoate (0.09%) | 6.9 | 10.0 | 12.8 | 16.2 |

TABLE 9 (cont.d)

| Stabilizer and Amount thereof (% by weight) | | MFI after extrusion No. 1 | 3 | 5 | 7 |
|---|---|---|---|---|---|
| Antiox A + Zn octanoate | (0.08%) | 7.0 | 10.3 | 13.5 | 16.8 |
| Antiox A + Zn octanoate | (0.07%) | 7.2 | 11.0 | 15.1 | 19.2 |
| Antiox A | (0.1%) | 7.1 | 10.5 | 13.8 | 17.4 |
| Antiox A + ZnDMDTC* | (0.1%) | 7.2 | 9.5 | 11.8 | 13.2 |
| Antiox A + ZnDMDTC* | (0.09%) | 7.3 | 9.7 | 12.5 | 13.9 |
| Antiox A + ZnDMDTC* | (0.08%) | 7.3 | 10.2 | 13.1 | 17.2 |
| Antiox A + ZnDMDTC* | (0.07%) | 7.4 | 10.6 | 13.9 | 17.4 |

* Zn DMDTC = zinc dimethyldithiocarbamate

TABLE 10

| Stabilizer and Amount thereof (% by weight) | | MFI after extrusion No. 1 | 3 | 5 | 7 |
|---|---|---|---|---|---|
| None | | 9.5 | 23.2 | 39.6 | - |
| Antiox B | (0.1%) | 7.5 | 10.3 | 12.7 | 14.7 |
| Antiox B + Zn octanoate | (0.1%) | 7.0 | 9.6 | 12.4 | 14.6 |
| Antiox B + Zn octanoate | (0.09%) | 7.2 | 9.8 | 12.5 | 14.6 |
| Antiox B + Zn octanoate | (0.08%) | 7.4 | 9.8 | 12.4 | 14.7 |
| Antiox B + Zn octanoate | (0.07%) | 8.1 | 11.0 | 14.2 | 17.5 |
| Antiox B | (0.1%) | 7.5 | 10.3 | 12.7 | 14.7 |

TABLE 10 (cont.d)

| Stabilizer and Amount thereof (% by weight) | | MFI after extrusion No. 1 | 3 | 5 | 7 |
|---|---|---|---|---|---|
| Antiox B + ZnDMDTC* | (0.1%) | 6.3 | 8.1 | 10.0 | 10.9 |
| Antiox B + ZnDMDTC* | (0.09%) | 7.0 | 9.9 | 12.1 | 13.8 |
| Antiox B + ZnDMDTC* | (0.08%) | 7.2 | 10.0 | 12.3 | 13.9 |
| Antiox B + ZnDMDTC* | (0.07%) | 7.5 | 10.7 | 13.5 | 16.5 |
| Antiox B | (0.1%) | 7.5 | 10.3 | 12.7 | 14.7 |
| Antiox B + Poliplast 6** | (0.1%) | 7.1 | 9.7 | 12.1 | 13.8 |
| Antiox B + Poliplast 6** | (0.09%) | 7.5 | 10.8 | 14.0 | 17.2 |
| Antiox B + Poliplast 6** | (0.08%) | 7.5 | 11.7 | 15.9 | 18.3 |
| Antiox B + Poliplast 6** | (0.07%) | 7.7 | 12.6 | 16.3 | 19.6 |

* Zn DMDTC = zinc dimethyldithiocarbamate

** Poliplast 6 = Blend of zinc salts of unsaturated fatty acids marketed by the firm Bozzetto

By using the previously disclosed general procedures HDPE is stabilized with 0.03% by weight of Antiox A, containing aluminum stearate - (aluminum tristearate) in an amount of 1000 ppm, as expressed as metal aluminum, relatively to the phenolic antioxidizer. The composition is repeatedly extruded and the values of MFI are reported in Table 11.

Always using the general procedures hereinabove dis closed, polypropylene is stabilized with 0.1% by weight of Antiox A containing aluminum stearate (aluminum tristearate in an amount of 1000 ppm, or aluminum acetylacetonate, in amounts of 1000 and 5000 ppm, as expressed as metal aluminum, relatively to the phenolic oxidizer. The composition is submitted to repeated extrusions and the values of MFI are reported in Table 12.

The yellow index of polypropylene composition is moreover determined after the first and after the fifth extrusion, and the values are reported in Table 13.

Polypropylene composition is moreover submitted to accelerated thermal ageing and the results are reported in Table 14.

In the Tables, to comparative purposes, also the values measured on the virgin polymer and on the polymer as containing only Antiox A are reported.

TABLE 11

| Stabilizer | MFI after extrusion No. 1 | 3 | 5 |
|---|---|---|---|
| a) None | 6.54 | 5.47 | 4.69 |
| b) Antiox A | 6.61 | 6.50 | 6.15 |
| c) Antiox A + Al stearate (1000 ppm) | 7.20 | 6.86 | 6.4 |

TABLE 12

| Stabilizer | MFI after extrusion No. 1 | 2 | 3 |
|---|---|---|---|
| a) None | 9.5 | 23.2 | 39.6 |
| b) Antiox A | 7.1 | 10.5 | 13.8 |
| c) Antiox A + Al stearate (1000 ppm) | 7.36 | 10.82 | 14.21 |
| d) Antiox A + | | | |

TABLE 12 (cont.d)

| Stabilizer | MFI after extrusion No. 1 | 2 | 3 |
|---|---|---|---|
| Al Acac* (1000 ppm) | 7.22 | 10.79 | 13.73 |
| e) Antiox A + | | | |
| Al Acac* (5000 ppm) | 7.31 | 10.35 | 11.90 |

* Al Acac = Aluminum acetylacetonate

TABLE 13

| Stabilizer | Yellow Index After Extrusion No. 1 | 5 |
|---|---|---|
| a) Antiox A | 4.94 | 7.36 |
| b) Antiox A + | | |
| Al stearate (1000 ppm) | 4.51 | 6.78 |
| c) Antiox A + | | |
| Al stearate (5000 ppm) | 4.17 | 5.63 |
| c) Antiox A + | | |
| Al Acac* (1000 ppm) | 4.61 | 6.96 |
| e) Antiox A + | | |
| Al Acac* (5000 ppm) | 4.02 | 6.10 |

* Al Acac = Aluminum acetylacetonate

TABLE 14

| Stabilizer | Yellow Index, hours 0 | 24 | 72 | 96 | 120 | 144 |
|---|---|---|---|---|---|---|
| a) Antiox A | 4.94 | 6.38 | 7.80 | 8.32 | 9.05 | 9.75 |
| b) Antiox A + | | | | | | |
| Al stearate (1000 ppm) | 4.51 | 6.73 | 8.61 | 8.54 | 9.39 | 10.09 |
| c) Antiox A + | | | | | | |
| Al stearate (5000 ppm) | 4.17 | 5.35 | 6.99 | 7.57 | 8.28 | 9.10 |
| d) Antiox A + | | | | | | |
| Al Acac* (1000 ppm) | 4.61 | 5.70 | 7.36 | 8.01 | 8.59 | 9.34 |

TABLE 14 (cont.d)

| Stabilizer | Yellow Index, hours | | | | | |
|---|---|---|---|---|---|---|
| | 0 | 24 | 72 | 96 | 120 | 144 |
| e) Antiox A + | | | | | | |
| Al Acac* (5000 ppm) | 4.02 | 5.34 | 7.25 | 7.99 | 8.51 | 9.23 |

* Al Acac = Aluminum acetylacetonate

From the results of the preceding experimental Examples, it may be noted that the zinc and aluminum compound is capable of enhancing the stabilizing effect of the phenolic antioxidizer on polypropylene degradation (which occurs through the breakdown of polymeric chain) and on the degradation of several polyethylenes (which occurs mainly by cross-linking phenomena).

## Claims

1. Stabilizer system for organic polymers formed by at least a phenolic antioxidizer and by at least a zinc or aluminum compound selected among zinc or aluminum carboxylates, dithiocarbamates, phenates and organometallic complexes, or zinc oxide, in an amount of from 50 to 10,000 parts per million (ppm) by weight, as expressed as metal zinc or aluminum, relatively to the phenolic antioxidizer.

2. Stabilizer system according to claim 1, characterized in that it contains the zinc or aluminum compound in amounts of from 100 to 5,000 ppm, expressed as metal zinc or aluminum, relatively to the phenolic antioxidizer.

3. Stabilizer system according to claims 1 and 2, characterized in that the compound of zinc or of aluminum is selected among zinc or aluminum salts of fatty acids, either saturated or unsaturated, of from 2 to 20 carbon atoms, either with straight or with branched chain; among the zinc or aluminum salts of aromatic acids possibly bearing one or more alkyl (of from 1 to 10 carbon atoms) of hydroxy substituents; zinc or aluminum salts of alkyl-and dialkyl-dithiocarbamic acids; zinc or aluminum phenates deriving from phenol or from phenol bearing one or more alkyl substituents (of from 1 to 10 carbon atoms); zinc and aluminum acetylacetonates; and zinc oxide.

4. Stabilizer system according to claim 3, characterized in that the compound of zinc or aluminum is selected among zinc or aluminum salts of 2-ethylhexanoic acid, n-octanoic acid, stearic acid, benzoic acid, salicylic acid, 3,5-di-tert.butyl-4-hydroxyphenyl-propanoic acid, dimethyldithiocarbamic acid, dibutyldithiocarbamic acid and dinonyldithiocarbamic acid, zinc or aluminum p-nonylphenate, zinc or aluminum 2,4-di-tert.butylphenate and zinc oxide.

5. Stabilizer system according to claim 1, characterized in that the phenolic antioxidizer is selected among those belonging to the following classes: 2,6-dialkylphenols, bis-phenols, aromatic hydroxybenzyls, amides of $\beta$-(3,5-di-tert-butyl-4-hydroxyphenyl)-propanoic acid, esters of $\beta$-(3,5-di-tert-butyl-4-hydroxyphenyl)-propanoic acid and diphenolic spiro-diacetals and spiro-diketals.

6. Stabilizer system according to claim 5, characterized in that the phenolic antioxidizer is selected among those to be defined according to the following formulae:

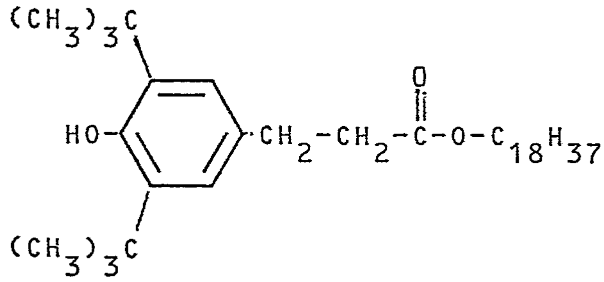

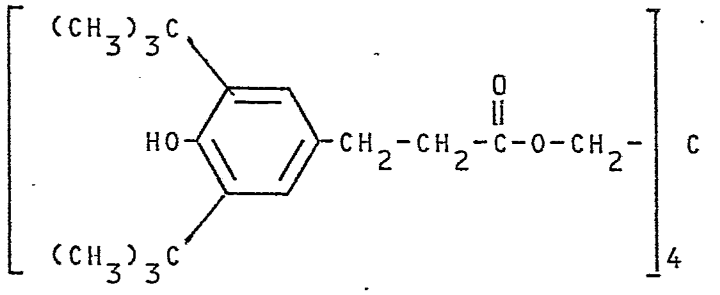

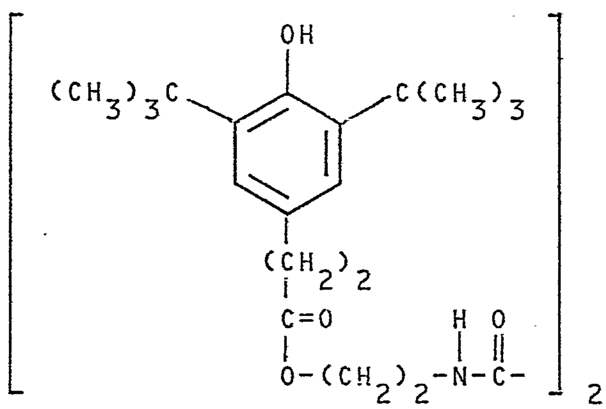

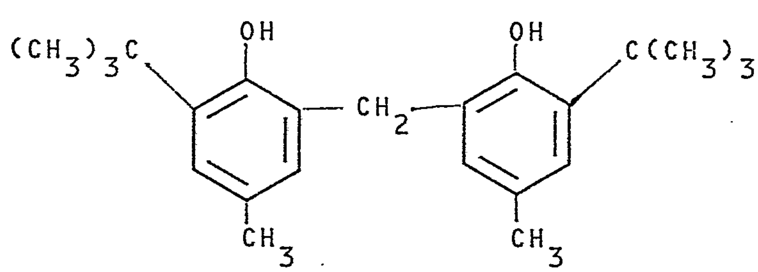

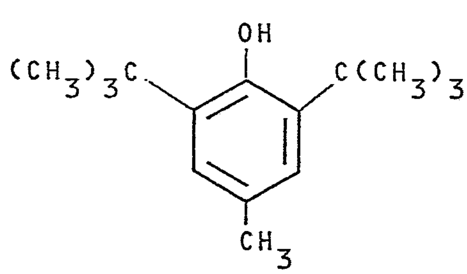

7. Stabilized polymeric composition, characterized in that it contains an organic polymer and an amount of from 0.005 to 10% by weight, relatively to the organic polymer, of the stabilizer system according to claims from 1 to 6.

8. Stabilized polymeric composition according to claim 7, characterized in that it contains an amount of from 0.01% to 4% by weight of said stabilizer system.

9. Stabilized polymeric composition, characterized in that the organic polymer is selected among polypropylene, high density polyethylene, low density polyethylene, linear low density polyethylene and EPDM rubber.